(19) **Europäisches Patentamt**

**European Patent Office**

**Office européen des brevets**

(11) **EP 0 437 627 B1**

(12) **EUROPEAN PATENT SPECIFICATION**

(45) Date of publication and mention
of the grant of the patent:
**02.10.1996 Bulletin 1996/40**

(21) Application number: **90910896.1**

(22) Date of filing: **31.07.1990**

(51) Int Cl.⁶: **G06K 7/015**

(86) International application number:
**PCT/JP90/00980**

(87) International publication number:
**WO 91/02327 (21.02.1991 Gazette 1991/05)**

(54) **DIGITAL DATA READER OF DIGITAL DATA RECORDING SHEET**

NUMERISCHE DATENLESEVORRICHTUNG FÜR DATENSPEICHERBLATT

LECTEUR DE DONNEES NUMERIQUES POUR FEUILLE D'ENREGISTREMENT DE DONNEES
NUMERIQUES

(84) Designated Contracting States:
**AT BE CH DE DK ES FR GB IT LI LU NL SE**

(30) Priority: **02.08.1989 JP 200467/89**

(43) Date of publication of application:
**24.07.1991 Bulletin 1991/30**

(73) Proprietor: **YOSHIDA, Hirokazu**
**Osaka-shi, Osaka 534 (JP)**

(72) Inventor: **Hirokazu, Yoshida**
**Osaka-shi, Osaka (JP)**

(74) Representative: **Lehn, Werner, Dipl.-Ing. et al**
**Hoffmann, Eitle & Partner,**
**Patentanwälte,**
**Postfach 81 04 20**
**81904 München (DE)**

(56) References cited:
**JP-A- 6 172 371          JP-A- 6 476 176**

• **PATENT ABSTRACTS OF JAPAN vol. 4, no. 66
(P-011) 17 May 1980 & JP-A-55 033 254**

**Description**

The present invention relates to a digital data reader for digital data communication using a digital data recording sheet. More particularly, it relates to a digital reader for reading the digital data recording sheet recording digital data consisting of $2^n$ binary data (e.g. binary data indicating chinese characters composed of $2^4$ JIS codes ) in binary directions.

With respect to a digital data recording sheet and a digital data reader of the recording sheet, the inventor of the present invention has invented 'Identification Code Sheet" Japanese Patent Application No. Sho 62-173352 (1987) and "Identification Code Reader" Japanese Patent Application Laid Open No. Sho 64 -76176 (1989), which are published already in the aforesaid official gazettes.

In the inventions stated above, the technical concept of facilitating the display of JIS codes relative to the chinese characters by displaying binary data of four or more in binary directions is disclosed, and at the same time, the technical concept of enabling the accurate reading of digital data by defining a mark area by division marks to record the binary data in the mark area is disclosed.

Moreover, the inventor of the present invention has invented "Digital Data Recording Sheet and Method of Digital Data communication", Japanese Patent Application No. Hei 1-51971 (1989). The invention has disclosed a long distance communication method by written communication (FAX transmission) using the recording sheet, wherein the mark area is defined by the division marks and binary data are recorded in the mark area.

In the published invention aforementioned, though such problems as occurrence of errors by variation of the mark area due to expansion and contraction of sheet and changes in paper feeding speed at mailing and FAX transmission of the digital data recording sheet can be solved by the prior invention, in the case of same kind of signals, when the division marks slip from the original display position due to expansion and contraction of the sheet and changes in the sheet feeding speed, discrimination with the binary signal mark indicated in the mark area becomes indistinct.

It is an object of the present invention to respond to deformation of the display area without using the division marks.

According to one aspect of the invention, there is provided a digital data reader of a digital data recording sheet, which sheet comprises an information area defined by an X-axis basic line which specifies an X-axis side of said information area; a Y-axis basic line which specifies a Y-axis side of said information area and an additional mark which specifies a corner portion of said information area for indicating a reading area and reading direction, said digital data reader comprising:

means for scanning the information area on said digital data recording sheet;

Y-axis internal line calculating means for calculating a plurality of Y-axis internal lines which divide said scanned information area at determined intervals into a plurality of parts between the Y-axis basic line and a Y-axis external line derived by connecting the outer end of the X-axis basic line and the additional mark, said Y-axis internal line calculating means further calculating for each Y-axis internal line an adjusted angle of inclination with respect to the X-axis basic line thereby compensating for a discrepancy of angle of inclination of the Y-axis external line and the Y-axis basic line relative to the X-axis basic line in the scanned information area;

X-axis internal line calculating means for calculating a plurality of X-axis internal lines which divide said scanned information area at determined intervals into a plurality of parts between the X-axis basic line and an X-axis external line derived by connecting the outer end of the Y-axis basic line and the additional mark, said X-axis internal line calculating means further calculating for each X-axis internal line an adjusted angle of inclination with respect to the Y-axis basic line thereby compensating for a discrepancy of angle of inclination of the X-axis external line and the X-axis basic line relative to the Y-axis basic line in the scanned information area;

mark area basic point detecting means for obtaining mark area basic points by calculating intersecting points of the Y-axis internal lines and X-axis internal lines;

mark area calculating means for calculating mark areas in response to the mark area basic points calculated by the mark area basic point detecting means; and

data discriminating means for detecting the presence of a binary signal mark in the mark area decided by the mark area calculating means.

According to another aspect of the invention, there is provided a digital data reader of a digital data recording sheet, which sheet comprises an information area defined by an X-axis basic line which specifies an X-axis side of said information area, a Y-axis basic line which specifies a Y-axis side of said information area, an array of division marks in said information area, a plurality of internal line position marks along each of said axes and an additional mark which specifies a corner portion of said information area for indicating a reading area and reading direction, said digital data reader comprising:

means for scanning the information area on said digital data recording sheet;

Y-axis internal line calculating means for compensating for a discrepancy of angle of inclination relative to the X-axis basic line of the Y-axis basic line and a Y-axis external line derived by connecting the end of the X-axis basic line and the additional mark in the scanned information area, and calculating a plurality of Y-axis internal lines whose starting points on the X-axis basic line are decided by internal line position marks adjoining the X-axis basic line to divide said information area at determined intervals into a plurality of parts between the Y-axis basic line and Y-axis external line, said Y-axis internal line calculating means further calculating for each Y-axis internal line an adjusted angle of inclination with respect to the X-axis basic line;

X-axis internal line calculating means for compensating for a discrepancy of angle of inclination relative to the Y-axis basic line of the X-axis basic line and an X-axis external line derived by connecting the end of the Y-axis basic line and the additional mark, and calculating a plurality of X-axis internal lines whose starting points on the Y-axis basic line are decided by internal line position marks adjoining the Y-axis basic line to divide said information area at determined intervals into a plurality of parts between the X-axis basic line and the X-axis external line, said X-axis internal line calculating means further calculating for each X-axis internal line an adjusted angle of inclination with respect to the Y-axis basic line;

division mark detecting means for detecting a said division mark within a tolerance zone relative to an intersecting point of a said Y-axis internal line and a said X-axis internal line as the effective division mark;

mark area calculating means for calculating a mark area in response to the division mark detected by the division mark detecting means; and

data discriminating means for detecting the presence of a binary signal mark in the mark area decided by the mark area calculating means.

For a better understanding of the invention, and to show how the same may be carried into effect, reference will now be made, by way of example, to the accompanying drawings, in which:

Fig. 1 is a block diagram of the first to fourth embodiments showing a microcomputer having various functions;

Fig. 2 is an explanatory view showing a method of calculating data areas during reading of a digital data recording sheet;

Fig. 3 is the similar explanatory view of a modification of the first embodiment;

Fig. 4 is an explanatory view showing a method of calculating data areas at reading of digital data recording sheet by the second embodiment;

Fig. 5 is an explanatory view showing a method of calculating data areas at reading of digital data recording sheet by the third embodiment;

Fig. 6 is a schematic view of data areas;

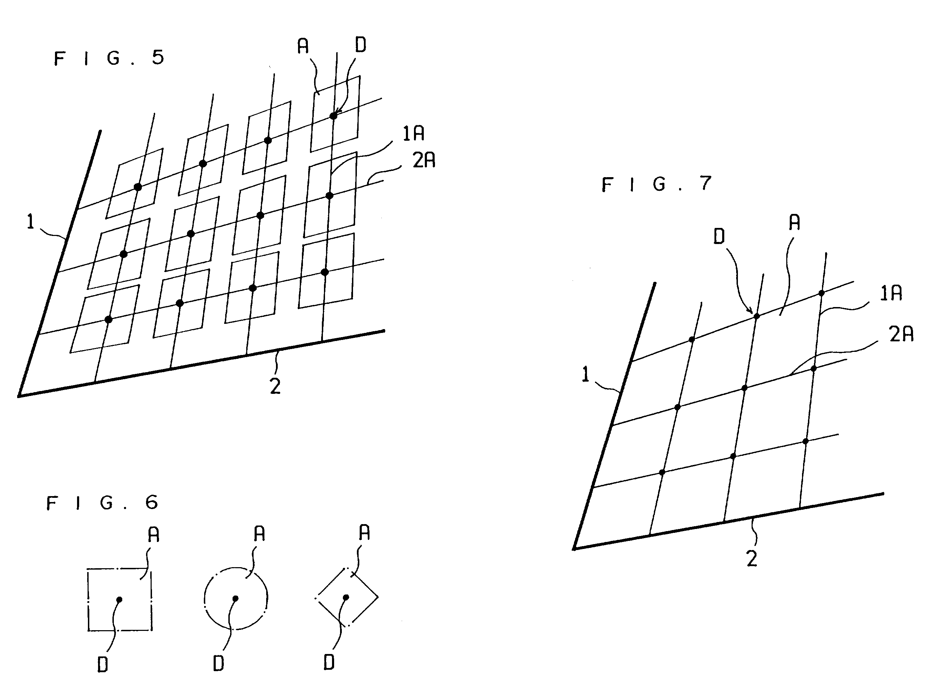

Fig. 7 is an explanatory view showing a method of calculating data areas during reading of a digital data recording sheet by the fourth embodiment;

Fig. 8 is a block diagram of the fifth embodiment showing a microcomputer having various functions;

Fig. 9 is an explanatory view showing a method of calculating data areas during reading of a digital data recording sheet by the fifth embodiment;

Fig. 10 to Fig. 14 are plan views of a digital data recording sheet used in embodying the present invention;

Fig. 15 and 16 are explanatory views of a display area;

Fig. 17 is an explanatory view of binary code marks;

Fig. 18 is a fragmentary explanatory view of the discrimination code sheet of Fig. 17 showing the recorded state of binary code marks;

Fig. 19 is an explanatory view showing examples of display in a display area;

Fig. 20 is an explanatory view of a display area having an auxiliary area; and

Fig.21 is an explanatory view showing display areas when an X-axis basic line and a Y-axis basic line are not orthogonally intersected.

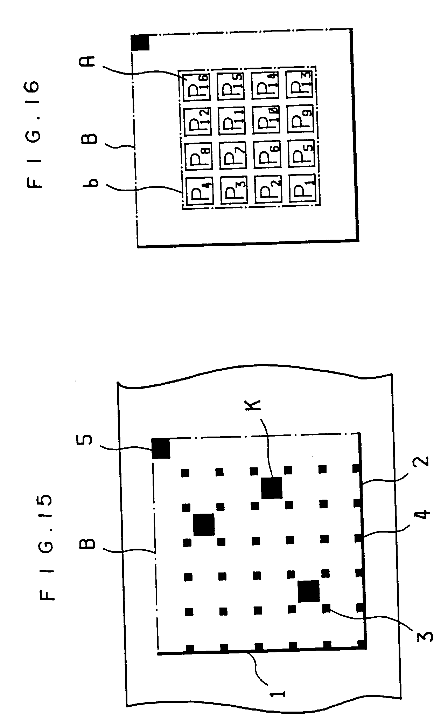

In the present system, the digital code recording sheet (identification code sheet) disclosed in the Japanese Patent Application Laid Open No. Sho 64-86289 (1989) (Identification Code Sheet) and Japanese Patent Application Laid Open No. Sho 64-76176 (1989) (Identification Code Reader) by the inventor of the present invention is used. The digital code recording sheet, referring to Fig. 15, includes a code display surface B having a quadrangular display area b of suitable shape and area regulated by an X-axis basic line 2, a Y-axis basic line 1 and an additional mark 5, and the display area b is divided into the mark areas (small divisions) A of more than $2^4 = 16$ (in Fig. 16, divided into 16 mark areas of $P_1, P_2, P_3 \ldots P_{16}$). By recording a binary signal mark K in respective mark areas A, 16 binary codes are recorded in the whole display area b and $2^4 \times 4$ figures (i.e. by combining four out of 0, 1, 2, . . . F at $2^4$) are responded to JIS Chinese character codes, thereby any one suitable Chinese character can be recorded and displayed by one display area b.

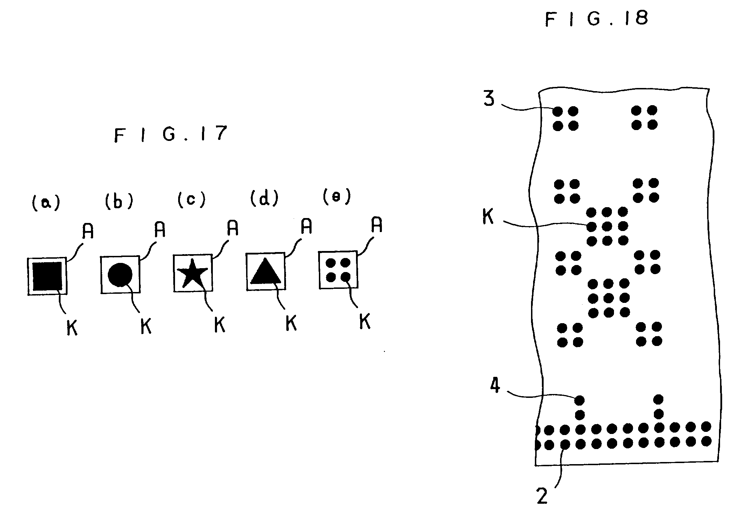

As the binary signal mark K for recording and displaying digital data (binary code) in respective mark areas A, the mark area A is not necessary to be completely painted out as shown in Fig. 17(a), but a blank portion may be partly kept in the mark area A as Figs. 17 (b), (c), (d) and the other marks may be painted, for example, a circle in Fig. 17b, a star in Fig. 17(c) and a triangle in Fig. 17(d), and furthermore, as shown in Fig. 17(e), the binary signal K may be formed by arranging a plurality of small marks k of any shape. Also, a method of displaying the binary signal of the mark area A is not limited to the marking method aforementioned, a method of marking by punching and magnetic ink is also effective, moreover, two types of signal marks such as a special fluorescent paint magnetic ink can be displayed.

Fig. 18 shows the case wherein the digital data recording sheet of Fig. 15 is printed out by a 24-dot personal computer printer, wherein 2 dots are allocated to an internal line position mark 4, 4 dots to a division mark 3, and 9 dots to the binary signal mark K displayed in the mark area A surrounded by the division mark 3. 9 dots are allocated to the additional mark 5.

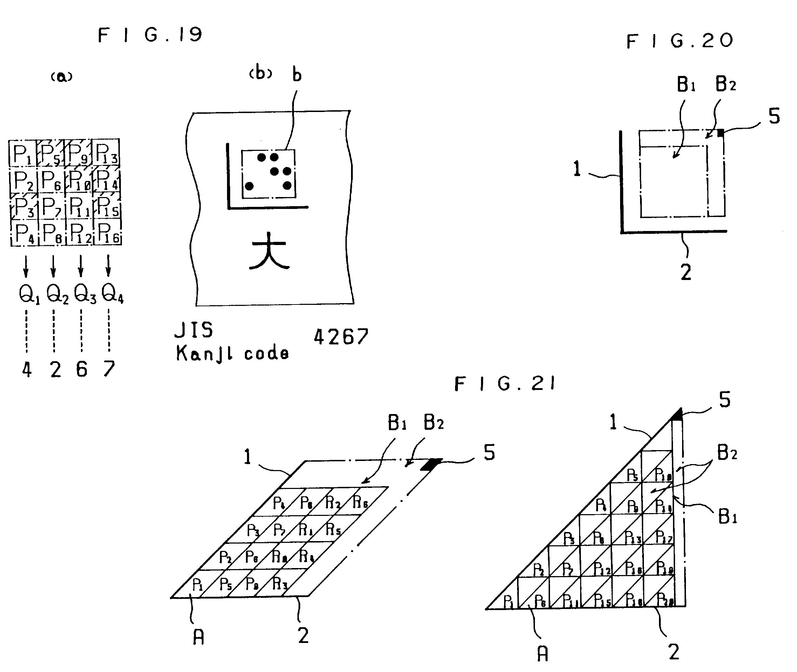

Fig. 19 shows an example of recording digital data (binary code data) with respect to digital data recording sheet, wherein in Fig. 19(a), a display area B is divided into $2^4 = 16$ mark areas A, which are respectively addressed by $P_1$, $P_2$, ... $P_{16}$ and each four addresses are grouped into intermediate divisions of $Q_1$, $Q_2$, $Q_3$, $Q_4$ and Fig. 19(b) shows the case wherein " 大" of the JIS Chinese character code 4267 is recorded.

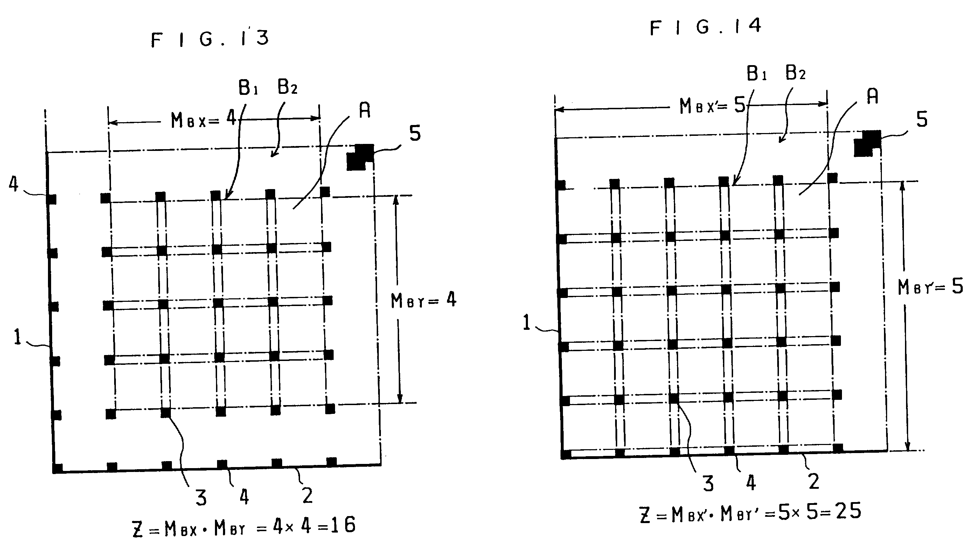

Fig. 20 shows an example of utilization wherein an auxiliary area $B_2$ is provided on the outside of a data area $B_1$ (16 mark areas A and 25 mark areas A in Fig. 13 and Fig. 14) of $P_1$ ... $P_{16}$ of Fig. 19(a), and additional information (reading direction, country name, pages, parity check code etc.) for transmit data are displayed in the auxiliary area.

Referring to Fig. 13, the number Z of mark areas A of the data $B_1$ is calculated by the following equation,

$$Z = M_{BX} \times M_{BY}$$

where,

$M_{BX}$ = the number of mark areas A in a direction of X-axis [the number of internal line position marks on X-axis of the data area $B_1$ - 1]
$M_{BY}$ = the number of mark areas A in a direction of Y-axis [the number of internal line position marks on Y-axis of the data area $B_1$ - 1].

By the number of data Z, the number of bits which is expressible by the data area B1 is decided as the following example.
The number of data = $2^z$ , $Z = M_{BX} \times M_{BY}$

Example 1) character, code :     $M_{BX}=4$, $M_{BY}=4$
the number of bits $2^{16}=65,536$ (24 dots print)
Example 2) music etc. :     $M_{BX}=5$, $M_{BY}=4$
the number of bits $2^{20} = 1,048,576$ (32 dots print)
Example 3) color image:     $M_{BX}=6$, $M_{BY}=4$
the number of bits $2^{24}= 16,777,210$ (32 dots print)

Fig. 14 shows the case wherein the mark area A is decided by utilizing the auxiliary division mark (also including the function as the internal line position mark ) 4, X-axis basic line 2 and Y-axis basic line 1 besides the division mark 3. The number $M_{BX}$, of mark areas A in the X-axis direction and the number $M_{BY}$, of mark areas A in the Y-axis direction area are as follows.

$M_{BX'}$ =     the number of internal line position marks 4 in the X-axis direction of the data area $B_1$
$M_{BY'}$ =     the number of internal line position marks 4 in the Y-axis direction of the data area $B_1$

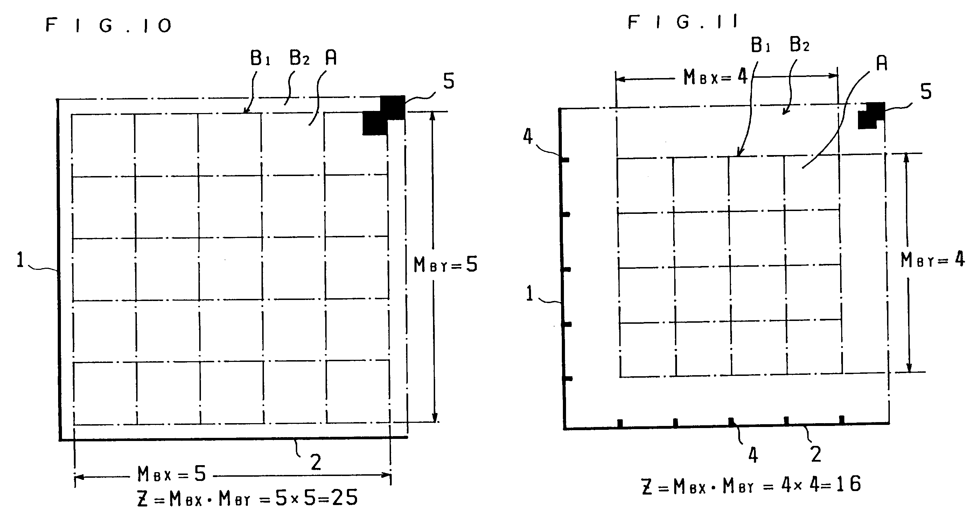

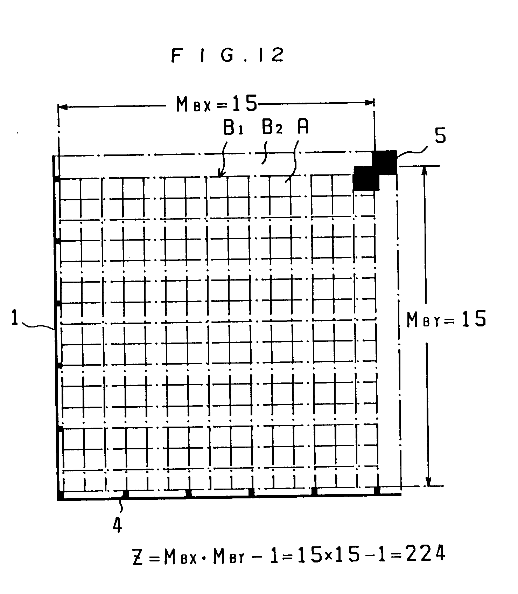

Though the division mark 3 is necessary for carrying out the fifth embodiment, it may be omitted, as shown in Fig. 11 and Fig. 12, for embodying the first to fourth embodiments, and moreover, as shown in Fig. 10, the internal line position mark 4 can also be omitted.

Even in the case wherein the division mark 3 and the internal line position mark 4 are not necessary for reading data, they can be added for the purpose of printing data on the digital data recording sheet and confirming the write position. In this case, the division mark 3 and internal line position mark 4 may be printed by ink of colors and kinds different from the X-axis basic line 2, Y-axis basic line 1, additional mark 5 and binary signal mark k also as to be discriminated and excluded from data reading. Similarly, the X-axis internal line 2A and Y-axis internal line 1A displaying the mark area A may preferably by printed with unreadable ink such that the mark area A can be visually confirmed. Furthermore, the recording sheet whereon, together with the X-axis internal line 2A and Y-axis internal line, the X-axis basic line 2, Y-axis basic line 1, additional mark 5, internal line position mark 4 etc. are printed with unreadable ink beforehand, may be used to facilitate visual confirmation of the mark area A at data writing and printing.

Next, a digital data reader of the present invention will be described.

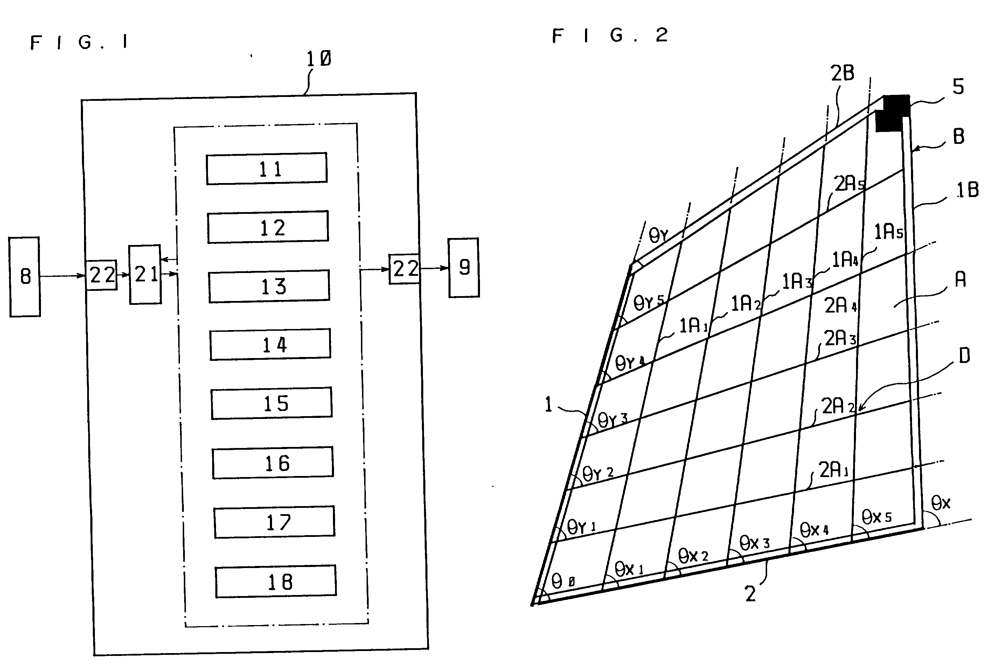

Referring to Fig. 1 and Fig. 2, the first embodiment is described.

A microcomputer 10 which moves a sensor (line sensor) 8, inputs read signals, and outputs JIS Chinese character codes, the other displays and binary signal for printout to output devices 9 such as a display and printer is provided.

In the microcomputer 10, the following functions as display area deciding means 11, Y-axis internal line calculating means 12, X-axis internal line calculating means 13, mark area basic point detecting means 14, mark area calculating means 15, data discriminating means 16, binary code conversion means 17 and code conversion means for output device 18 are set by microcomputer programs.

The display area deciding means 11 detects the X-axis basic line 2, Y-axis basic line 1 and additional mark 5, and functions to detect the display area B by the microcomputer operation (e.g. refer to prior Japanese Patent Application Laid Open No. Sho 64-76176 (1989)).

The Y-axis internal line calculating means 12 functions to calculate a Y-axis internal line 1A, by calculating the difference between the intersecting angle $\theta_0$ of the X-axis basic line 2 and the Y-axis basic line 1, and the intersecting angle $\theta_x$ of the X-axis basic line 2 and the Y-axis external line 1B of the display area, calculating the intersecting angle $\theta_{xn}$ with the X-axis basic line 2 as,

$$\theta_{xn} = \theta_0 + \frac{\theta_x - \theta_0}{M_{BX}} \times n$$

[ $M_{BX}$ = the number of mark areas in a direction of X-axis ] , and calculating a starting point of the Y-axis basic line 1 on the X-axis basic line.

The X-axis internal line calculating means 13 functions to calculating the X-axis international line 1A, by detecting the intersecting angle $\theta_0$ of the X-axis basic line 2 and Y-axis basic line 1 and the intersecting angle $\theta_Y$ of the X-axis basic line 2 and the X-axis external line 2A of the display area, calculating the intersecting angle $\theta_{Yn}$ with the Y-axis basic line 1 as,

$$\theta_{Yn} = \theta_0 + \frac{\theta_Y - \theta_0}{M_{BY}} \times n$$

($M_{BY}$ = the number of mark areas in a direction of Y-axis), and calculating a starting point of the Y-axis basic line 1 on the X-axis basic line.

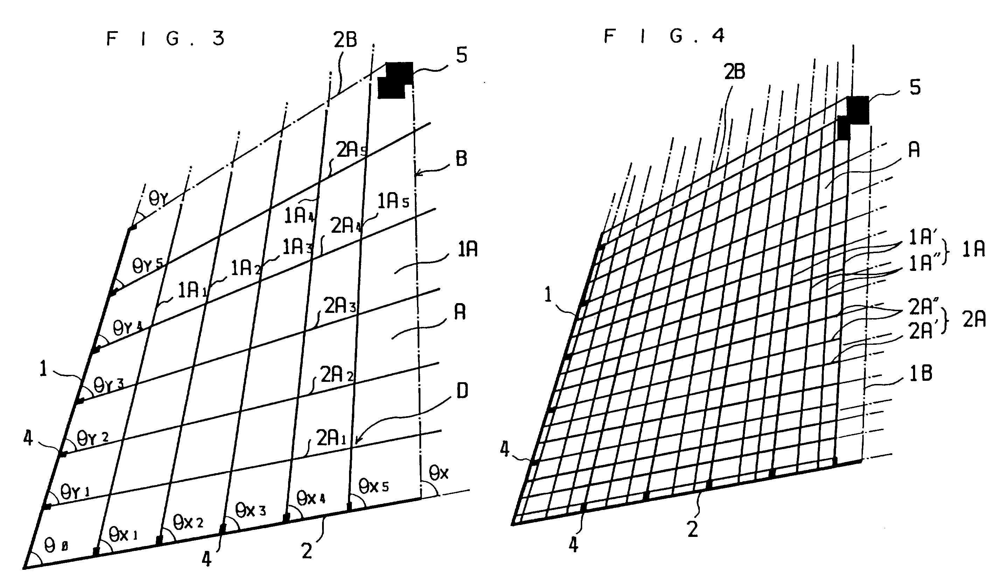

When calculating the starting point of the Y-axis basic line 1 on the X-axis basic line and the starting point of the X-axis internal line 2A on the Y-axis basic line, it is decided by the operation in the first modification of the first embodiment of Fig. 2, and in the second modification of the first embodiment of Fig. 3, the starting point is calculated respectively by the Y-axis internal line calculating means 12 and the X-axis internal line calculating means 13, as the Y-axis internal line 1A passing through the internal line position mark 4 adjoining the X-axis basic line 2, and as the X-axis internal line 2A passing through the internal line position mark 4 adjoining the Y-axis basic line 1.

The mark area basic point detecting means 14 functions to calculating a mark area basic point D by calculating, with respect to the Y-axis internal line 1A and the X-axis internal line 2A respectively calculated by the Y-axis internal line calculating means 12 and the X-axis internal line calculating means 13, a point of intersection of the two internal lines.

The mark area calculating means 15 functions to calculate the mark area A in response to the mark area basic point D calculated by the mark area basic point detecting means 14.

The data discriminating means 16 performs image processing with respect to respective mark areas A, and includes a function to judge the presence of the binary signal mark K, when the value of binary signal mark K inputted in proportion to the area of each mark area A is within a predetermined a size area (e.g. in the embodiment of Fig. 18, an integrated value corresponds to 4 to 9 dots), and the binary code conversion means 17 includes a function to decide the binary code value of $2^4$ [n $\geqq$ 4 ] by judging the presence of the binary signal mark in each mark area. To the microcomputer 10, besides an operation unit (CPU) 20 which performs the functions above-mentioned and memory means 21, an interface for input (data take-in processing means ) 22 and an interface for output (data conversion means for output devices ) 23 are attached.

A method of reading data by the first embodiment will be described.

Though digital data recording sheet in Fig. 10 is inputted by the long distance communication such as FAX and mails, and used as various data input means such as reading product codes attached to the products, at reading, as shown in Fig. 2, by expansion and contraction of sheet, errors in incident direction of a laser beam of a read sensor and in sheet feeding direction, changes in the diagonal angle of the X-axis basic line 2 and the Y-axis basic line 1 occur, and the Y-axis external line 1B connecting the additional mark 5 and the outer end of the X-axis basic line 2 and the Y-axis basic line 1 become unparallel, results in the display area B of irregular quadrangle.

The present system is, in order to prevent the errors aforementioned, designed to read the signal mark accurately by calculating the original display area B. In the following, an example of its discriminating method will be described.

As shown in Fig. 10 to Fig. 14, on the original digital recording sheet, the X-axis basic line 2, Y-axis basic line 1 and additional mark 5 are printed regularly, and in the embodiment, a display area of rectangular parallelogram is formed by the X-axis basic line 2, Y-axis basic line 1 and additional mark 5. Accordingly, when sheet is expanded due to a stress exerted on the recording sheet and the sheet feeding speed or any other reasons, it deforms proportionally to a certain extent, so that the following equation of $\theta_{Xn}$, $\theta_{Yn}$ is met.

The display area detecting means 11 of the microcomputer 10 detects the display area B surrounded by the X-axis basic line 2, Y-axis basic line 1 and additional mark 5, and calculates the Y-axis external line 1B and the X-axis external line 2B.

The Y-axis internal line calculating means 12 calculates the difference between the intersecting angle $\theta_0$ of the X-axis basic line 2 and Y-axis basic line 1, and the intersecting angle $\theta_X$ of the Y-axis external line 1B and X-axis basic line 2, and calculating a starting point on the X-axis basic line ( in the embodiment of Fig. 3, the starting point is calculated by the internal line position mark 4 adjoining the X-axis basic line 2) to calculate the Y-axis internal lines 1A1, 1A2, 1A3, . . . 1An,

as intersecting angle $\theta_{Xn}$ with the X-axis basic line 2,

$$\theta_{Xn} = \theta_0 + \frac{\theta_X - \theta_0}{M_{BX}} \times n$$

where,

[ $M_{BX}$= the number of mark areas in a direction of X-axis ] .

The X-axis internal line calculating means 13 calculates the difference between the intersecting angle $\theta_0$ of the X-axis basic line 2 and Y-axis basic line 1, and the intersecting angle $\theta_Y$ of the X-axis external line 1B and Y-axis basic line 1, and calculating a starting point on the Y-axis basic line (in the embodiment of Fig. 3, the starting point is calculated by the internal line position mark 4 adjoining the Y-axis basic line 1) to calculate the X-axis internal lines $2A_1$, $2A_2$, $2A_3$ . . . 2An,

as intersecting $\theta_{Yn}$ with the Y-axis basic line 1

$$\theta_{Yn} = \theta_0 + \frac{\theta_Y - \theta_0}{M_{BY}} \times n$$

where,

[$M_{BY}$ = the number of mark areas in a direction of Y-axis].

In the embodiment started above, for the Y-axis internal line 1An and X-axis internal line 2An, though the difference of the intersecting angles is equally corrected, various corrections may by applied, for example, by increasing the correcting amount progressively from the X-axis basic line 2 to X-axis external line 2B, or from the Y-axis basic line 1 to Y-axis external line 1B, or correcting 3 dimensionally from a point spaced from the display area.

Next, the mark area basic point detecting means 14 calculates points of intersection (mark area basic points) D of the aforesaid Y-axis internal lines $1A_1$, $1A_2$, $1A_3$ . . . 1An and the X-axis internal lines $2A_1$, $2A_2$, $2A_3$ . . . 2An.

The mark area calculating means 15 calculates the mark area A in response to the mark area basic point D calculated by the foresaid mark area basic point detecting means 14.

The data discriminating means 16 outputs binary signals or binary data of ON, OFF of Low, High, by designating the case wherein the binary signal mark K is present in the mark area A aforementioned as ON, and designating the case wherein the binary signal mark K is not present in the mark area A as OFF.

In the second embodiment the Y-axis internal line calculating means 12 functions, to calculate, as the Y-axis is internal line 1A, one or more Y-axis internal lines 1A" whose starting point on the X-axis basic line is decided by the operation besides the Y-axis internal line 1A' whose starting point on the X-axis basic line is decided for every detecting position of respective internal line position marks 4, between the Y-axis internal line 1A' whose starting point is the detecting position of the internal line position mark 4, and the X-axis internal line calculating means 13 calculates, as the X-axis internal line 2A, one or more X-axis internal lines 1A" whose starting point on the Y-axis basic line is decided for every detecting position of respective internal line position marks, between the X-axis internal line 1A' whose starting point is the detecting position of the internal line position mark 4.

Accordingly, as shown in Fig. 4, one or more Y-axis internal line 1A" are calculated between the Y-axis internal lines 1A' whose starting points are the internal line position mark 4, and one or more X-axis internal lines 2A" are calculated between the X-axis internal lines 2A' whose starting points are the internal line position marks 4. As a result, the number of mark area basic points D as well as mark areas A increase in series.

The mark area calculating means functions to calculate a predetermined area about the mark area basic point D by the operation into the mark area A.

Accordingly, as shown in Fig. 5, in place of the division mark of the prior system, the mark area A may be decided in response to the mark area basic point D and formed into various shapes as shown in Fig. 6.

In the third embodiment, the mark area calculating means 15 function to calculate an area surrounded by four mark area basic points D as the mark the area A (the area surrounded by two starting points of the Y-axis internal line 1A on the X-axis basic line and two mark area basic points D facing the starting points, and the area surrounded by two starting points of the X-axis internal line 2A on the Y-axis basic line and two mark area basic points D facing the starting points area also calculated as the mark area A). That is, the mark area basic points D regulates the periphery of the mark area A as same as the division mark of the prior system.

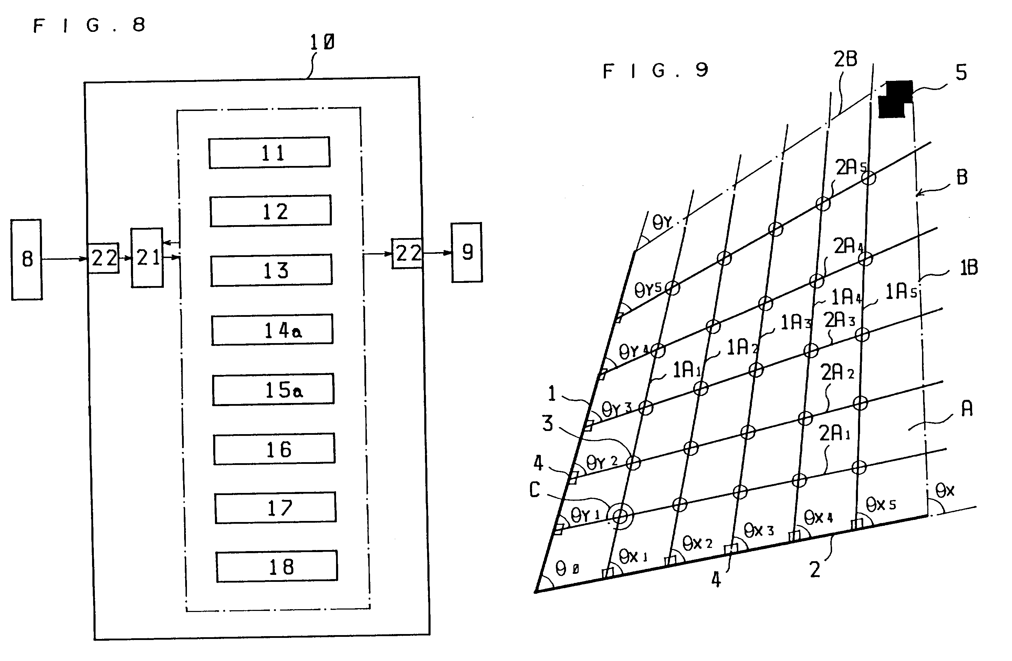

Referring to Fig. 8, in the fifth embodiment, in place of the mark area basic point detecting means 14 of the aforesaid method, with respect to the Y-axis internal line 1A calculated by the Y-axis internal line calculating means and the X-axis internal line 2A calculated by the X-axis internal line calculating means, division mark detecting means 14a wherein only the division mark 3 in the point of intersection of the two internal lines is effective is used, and the mark area calculating means 15a is functioned to calculate the mark area A in response to the division mark 3 detected by the division mark detecting means 14a.

When reading data by the fifth embodiment, referring to Fig. 9, the division mark detecting means 14a calculates the intersecting points of the Y-axis internal lines $1A_1$, $1A_2$, $1A_3$ . . . $1An$ and the X-axis internal lines $2A_1$, $2A_2$, $2A_3$ . . . $2An$, and detects the division mark 3 positioned in a constant tolerance C relative to the intersecting point as effective.

The mark area calculating means 15 detects the area surrounded by the division mark 3 detected by the division mark detecting means 14 as aforementioned (or including the area surrounded by the auxiliary division mark 5, X-axis basic line 2 and Y-axis basic line 1) as the mark area A.

The present invention may be carried out more effectively by deciding and discriminating the position of the division mark by providing a tolerance to some extent (or to allow certain discrepancy in position), when positioning the division mark 3.

Even when the display area B is deformed, the mark area A is specified accurately and the accurate binary code data are outputted.

As a counter measure for movement of the division mark due to deformation of the display area, when the division mark 3 and the binary signal mark K of the mark area A are the same type of signal (e.g. printed by ink having the same color), they can not be distinguished, so that in order to prevent misjudging of the binary signal mark K in the mark area A as the division mark 4, though a method of utilizing the reader of the prior invention and distinguishing the two by means such as using the different type of ink (e.g. fluorescent ink and magnetic ink) and changing the shape of the mark are considered, it has drawbacks, when compared with the present invention, such as increase in cost, the longer image processing time and the rate of error.

In the embodiment, though the X-axis basic line 2 and the Y-axis basic line 1 are crossed orthogonally, as shown in Fig. 15, they may be crossed at a suitable angle and the mark area A may be formed into shape other than the quadrangle.

Since the first embodiment, as aforementioned, responds to the deformation of the display area by deforming and correcting position of the mark area by correcting the Y-axis internal line and the X-axis internal line, data of the recording sheet can be read accurately even in the case of expansion and contraction of the digital data recording sheet, changes in reading direction of a sensor (e.g. errors in the irradiating direction of a sensor laser beam), and unsuitable testing position and placing angle of products being detected.

In the second embodiment, a data volume of the digital data recording sheet can be increased by increasing the Y-axis internal line and the X-axis internal line in the first embodiment.

In the third embodiment, the mark area can be optionally set by the operation of the microcomputer in response to the mark area basic point in the first embodiment.

In the fourth embodiment, the mark area basic point can be operated to regulate the periphery of the mark area as same as the division marks in the first embodiment.

In the fifth embodiment, since the mark area is calculated by correcting the movement of position of the division mark due to deformation of the display area as stated above, data of recording sheet can be read accurately corresponding always to the deformation of the display area. According errors in reading data of the recording sheet, in the case of expansion ans contraction of the digital data recording sheet, changes in the reading direction of a sensor (e. g. errors in the irradiating direction of a sensor laser beam) and unsuitable testing position and placing angle of products being detected, can be prevented.

As mentioned heretofore, a digital data reader of digital data recording sheet according to the present invention solves the problems of occurrence of error due to changes in the mark area, by expansion and contraction of sheet and changes in the sheet feeding speed, and reads information of the digital data recording sheet sent to the remote place by mails, FAX and so on accurately, thereby the long distance communication of digital data by the digital data recording sheet is substantially made possible.

The first embodiment of digital data reader described above comprises:

Y-axis internal line calculating means for correcting a discrepancy of angle of inclination relative to a Y-axis internal line and an X-axis basic line, compared with an angle of inclination of a Y-axis external line and Y-axis basic line relative to the X-axis basic line in a display area, and calculating a plurality of Y-axis internal lines whose starting points on the X-axis basic line are decided, X-axis internal line calculating means for correcting a discrepancy of angle of inclination relative to an X-axis internal line and the Y-axis basic line, compared with an angle of inclination of an X-axis external line and the X-axis basic line relative to the Y-axis basic line in a display area, and calculating a plurality of X-axis internal lines whose starting points on the Y-axis basic line are divided, mark area basic point detecting means for calculating an intersecting point of the Y-axis internal line and X-axis internal line to obtain a mark area basic point, mark area calculating means for calculating a mark area in response to the mark area basic point calculated by the mark area basic point detecting means, and data deciphering means for deciphering a binary signal mark of the mark area decided by the mark area calculating means.

In the second embodiment, the Y-axis internal line calculating means, as the Y-axis internal line, besides the Y-axis internal line whose starting point on the X-axis basic line is decided for each detecting position of respective internal line position marks, between the Y-axis internal lines whose starting points are the internal line position mark detecting positions, calculates one or more Y-axis internal line whose starting points on the X-axis basic line are decided by the operation, and the X-axis internal line calculating means, as the X-axis internal line, besides the X-axis internal line whose starting point on the Y-axis basic line is decided for each detecting position of respective internal position marks, between the X-axis internal lines whose starting points are the internal line position mark detecting positions, calculates one more X-axis internal lines whose starting points on the Y-axis basic line are decided by the operation to increase the information quantity of an information area.

In the third embodiment, the mark area calculating means calculates a predetermined area about the mark area basic point by the operation into the mark area.

In the fourth embodiment, the mark area calculating means calculates, an area surrounded by four mark area basic points, an area surrounded by two starting points of the Y-axis internal line on the X-axis basic line and two mark area basic points facing the starting points, and an area surrounded by two starting points of the X-axis internal line on the Y-axis basic line and the two mark area basic points facing the starting points, as the mark areas.

The fifth embodiment, with respect to the Y-axis internal line calculated by the Y-axis internal line calculating means and the X-axis internal line calculated by the X-axis internal line calculating means, detects a division mark on the intersecting point of the two internal lines, which is only effective, by the division mark detecting means as the division mark, calculates the mark area by the mark area calculating means in response to the division mark detected by the division mark detecting means, and by deciphering the binary signal mark of the mark area by the data deciphering means, the binary signal data and the division mark of the mark area of the digital data recording sheet can be discriminated.

## Claims

1. A digital data reader of a digital data recording sheet, which sheet comprises an information area (B) defined by an X-axis basic line (2) which specifies an X-axis side of said information area; a Y-axis basic line (1) which specifies a Y-axis side of said information area and an additional mark (5) which specifies a corner portion of said information area for indicating a reading area and reading direction, said digital data reader comprising:

   means (8) for scanning the information area on said digital data recording sheet;
   Y-axis internal line calculating means (12) for calculating a plurality of Y-axis internal lines ($1A_1$-$1A_5$) which divide said scanned information area at determined intervals into a plurality of parts between the Y-axis basic line (1) and a Y-axis external line (1B) derived by connecting the outer end of the X-axis basic line (2) and the additional mark (5), said Y-axis internal line calculating means (12) further calculating for each Y-axis internal line an adjusted angle of inclination ($\theta_{x1}$-$\theta_{x5}$) with respect to the X-axis basic line (2) thereby compensating for a discrepancy of angle of inclination ($\theta_0$, $\theta_x$) of the Y-axis external line (1B) and the Y-axis basic line (1) relative to the X-axis basic line (2) in the scanned information area;
   X-axis internal line calculating means (13) for calculating a plurality of X-axis internal lines ($2A_1$-$2A_5$) which divide said scanned information area at determined intervals into a plurality of parts between the X-axis basic line (2) and an X-axis external line (2B) derived by connecting the outer end of the Y-axis basic line (1) and the additional mark (5), said X-axis internal line calculating means (13) further calculating for each X-axis internal line an adjusted angle of inclination ($\theta_{Y1}$-$\theta_{Y5}$) with respect to the Y-axis basic line (1) thereby compensating for a discrepancy of angle of inclination ($\theta_0$, $\theta_Y$) of the X-axis external line (2B) and the X-axis basic line (2) relative to the Y-axis basic line (1) in the scanned information area;
   mark area basic point detecting means (14) for obtaining mark area basic points (D) by calculating intersecting points of the Y-axis internal lines ($1A_1$-$1A_5$) and X-axis internal lines ($2A_1$-$2A_5$);
   mark area calculating means (15) for calculating mark areas in response to the mark area basic points (D) calculated by the mark area basic point detecting means (14); and
data discriminating means (16) for detecting the presence of a binary signal mark (K) in the mark area decided by the mark area calculating means (15).

2. A digital data reader as set forth in claim 1, wherein in said Y-axis internal line calculating means (12), the adjusted angle of inclination ($\theta_{x1}$-$\theta_{x5}$) of each of the Y-axis internal lines is respectively calculated by successively adding to the angle of inclination ($\theta_0$) of the Y-axis basic line (1) an angle derived from the difference in angle between the Y-axis external line (1B) and Y-axis basic line (1) divided by the number of mark areas in the direction of Y-axis, and

in said X-axis internal line calculating means (13), the adjusted angle of inclination ($\theta_{Y1}$-$\theta_{Y5}$) of each of the X-axis internal lines is respectively calculated by successively adding to the angle of inclination ($\theta_0$) of the X-axis basic line an angle derived from the difference in angle between the X-axis external line (2B) and X-axis basic line (2) divided by the number of mark areas in the direction of Y-axis.

3. A digital data reader as set forth in claim 1 or 2, wherein the starting points of said X-axis internal lines are decided by segmenting the Y-axis basic line (1) into the number of the X-axis internal lines plus one, and

the starting points of said Y-axis internal lines are decided by segmenting the X-axis basic line (2) into the number of the Y-axis internal lines plus one.

4. A digital data reader as set forth in claim 1 or 2, wherein in the Y-axis internal line calculating means (12), a starting point of a said Y-axis internal line on the X-axis basic line (2) is derived from every detected position of a respective internal line position mark (4) on said sheet, and in X-axis internal line calculating means (13), a starting point of a said X-axis internal line on the Y-axis basic line (1) is derived from every detected position of a respective internal line position mark (4).

5. A digital data reader as set forth in claim 4, wherein said Y-axis internal line calculating means (12) further determines one or more Y-axis internal lines between the Y-axis internal lines whose starting points coincide with positions of the internal line position marks (4) ; and

said X-axis internal line calculating means (13) further determines one or more X-axis internal lines between the X-axis internal lines whose starting points coincide with positions of the internal line position marks (4).

6. A digital data reader as set forth in claim 3 or 4, wherein said mark area calculating means (15) calculates a predetermined area around the mark area basic point (D) as the mark area.

7. A digital data reader as set forth in claim 3 or 4, wherein said mark area calculating means (15) calculates respective areas surrounded by said four mark area basic points (D) as the mark area.

8. A digital data reader of a digital data recording sheet, which sheet comprises an information area (B) defined by an X-axis basic line (2) which specifies an X-axis side of said information area, a Y-axis basic line (1) which specifies a Y-axis side of said information area, an array of division marks (3) in said information area, a plurality of internal line position marks (4) along each of said axes and an additional mark (5) which specifies a corner portion of said information area for indicating a reading area and reading direction, said digital data reader comprising:

means (8) for scanning the information area on said digital data recording sheet;
Y-axis internal line calculating means (12) for compensating for a discrepancy of angle of inclination ($\theta_0$, $\theta_x$) relative to the X-axis basic line (2) of the Y-axis basic line (1) and a Y-axis external line (1B) derived by connecting the end of the X-axis basic line (2) and the additional mark (5) in the scanned information area, and calculating a plurality of Y-axis internal lines ($1A_1$-$1A_5$) whose starting points on the X-axis basic line (2) are decided by internal line position marks (4) adjoining the X-axis basic line to divide said information area at determined intervals into a plurality of parts between the Y-axis basic line (1) and Y-axis external line (1B), said Y-axis internal line calculating means (12) further calculating for each Y-axis internal line an adjusted angle of inclination ($\theta_{x1}$-$\theta_{x5}$) with respect to the X-axis basic line (2);
X-axis internal line calculating means (13) for compensating for a discrepancy of angle of inclination ($\theta_0$, $\theta_Y$) relative to the Y-axis basic line (1) of the X-axis basic line (2) and an X-axis external line (2B) derived by connecting the end of the Y-axis basic line (1) and the additional mark (5), and calculating a plurality of X-axis internal lines ($2A_1$-$2A_5$) whose starting points on the Y-axis basic line (1) are decided by internal line position marks (4) adjoining the Y-axis basic line to divide said information area at determined intervals into a plurality of parts between the X-axis basic line (2) and the X-axis external line (2B), said X-axis internal line calculating means (13) further calculating for each X-axis internal line an adjusted angle of inclination ($\theta_{Y1}$-$\theta_{Y5}$) with respect to the Y-axis basic line (1);

division mark detecting means (14a) for detecting a said division mark (3) within a tolerance zone (c) relative to an intersecting point (D) of a said Y-axis internal line (1A$_1$-1A$_5$) and a said X-axis internal line (2A$_1$-2A$_5$) as the effective division mark;

mark area calculating means (15a) for calculating a mark area (A) in response to the division mark (3) detected by the division mark detecting means (14a); and

data discriminating means (16) for detecting the presence of a binary signal mark (K) in the mark area (A) decided by the mark area calculating means (15a).

## Patentansprüche

1. Digitaldatenleser eines digitalen Digitaldaten-Aufzeichnungsblatts, wobei das Blatt umfaßt: einen Informationsbereich (B), der durch eine X-Achsen-Basislinie (2) definiert ist, die eine X-Achsen-Seite des Informationsbereichs bestimmt; eine Y-Achsen-Basislinie (1), die eine Y-Achsen-Seite des Informationsbereichs bestimmt, und eine Zusatzmarkierung (5), die einen Eckabschnitt des Informationsbereichs zum Anzeigen eines Lesebereichs und einer Leserichtung bestimmt, wobei der Digitaldatenleser umfaßt:

   eine Einrichtung (8) zum Abtasten des Informationsbereichs auf dem Digitaldaten-Aufzeichnungsblatt;

   eine Y-Achsen-Innenlinien-Berechnungseinrichtung (12) zum Berechnen einer Vielzahl von Y-Achsen-Innenlinien (1A$_1$-1A$_5$), die den abgetasteten Informationsbereich an vorgegebenen Intervallen in eine Vielzahl von Teilen zwischen der Y-Achsen-Basislinie (1) und einer Y-Achsen-Außenlinie (1B), die durch Verbinden des äußeren Endes der X-Achsen-Basislinie (2) und der Zusatzmarkierung (5) abgeleitet wird, unterteilen, wobei die Y-Achsen-Innenlinien-Berechnungseinrichtung (12) ferner für jede Y-Achsen-Innenlinie einen eingestellten Neigungswinkel ($\theta_{x1}$-$\theta_{x5}$) in bezug auf die X-Achsen-Basislinie (2) berechnet, um dadurch einen Diskrepanz eines Neigungswinkels ($\theta_0$, $\theta_x$) der Y-Achsen-Außenlinie (1B) und der Y-Achsen-Basislinie (1) relativ zu der X-Achsen-Basislinie (2) in dem abgetasteten Informationsbereich zu kompensieren;

   eine X-Achsen-Innenlinien-Berechnungseinrichtung (13) zum Berechnen einer Vielzahl von X-Achsen-Innenlinien (2A$_1$-2A$_5$), die den abgetasteten Informationsbereich an vorgegebenen Intervallen in eine Vielzahl von Teilen zwischen der X-Achsen-Basislinie (2) und einer X-Achsen-Außenlinie (2B), die durch Verbinden des Außenendes der Y-Achsen-Basislinie (1) und der Zusatzmarkierung (5) abgeleitet ist, unterteilen, wobei die X-Achsen-Innenlinien-Berechnungseinrichtung (13) ferner für jede X-Achsen-Innenlinie einen eingestellten Neigungswinkel ($\theta_{Y1}$-$\theta_{Y5}$) in bezug auf die Y-Achsen-Basislinie (1) berechnet, um dadurch eine Diskrepanz eines Neigungswinkels ($\theta_0$, $\theta_Y$) der X-Achsen-Außenlinie (2B) und der X-Achsen-Basislinie (2) relativ zu der Y-Achsen-Basislinie (1) in dem abgetasteten Informationsbereich zu kompensieren;

   eine Markierungsbereichs-Basispunkt-Erfassungseinrichtung (14) zum Ermitteln von Markierungsbereichs-Basispunkten (D) durch Berechnen von Schnittpunkten der Y-Achsen-Innenlinien (1A$_1$-1A$_5$) und X-Achsen-Innenlinien (2A$_1$-2A$_5$);

   eine Markierungsbereichs-Berechnungseinrichtung (15) zum Berechnen von Markierungsbereichen im Ansprechen auf die Markierungsbereichs-Basispunkte (D), die von der Markierungsbereichs-Basispunkt-Erfassungseinrichtung (14) berechnet werden; und

   eine Daten-Unterscheidungseinrichtung (16) zum Erfassen des Vorliegens einer Binärsignalmarkierung in dem Markierungsbereich, der von der Markierungsbereichs-Berechnungseinrichtung (15) bestimmt wird.

2. Digitaldatenleser nach Anspruch 1, dadurch gekennzeichnet, daß in der

   Y-Achsen-Innenlinien-Berechnungseinrichtung (12) der eingestellte Neigungswinkel ($\theta_{x1}$-$\theta_{x5}$) von jeder der Y-Achsen-Innenlinien jeweils berechnet wird, indem sukzessive zu dem Neigungswinkel ($\theta_0$) der Y-Achsen-Basislinie (1) ein Winkel zuaddiert wird, der aus der Winkeldifferenz zwischen der Y-Achsen-Außenlinie (1B) und der Y-Achsen-Basislinie (1) geteilt durch die Anzahl von Markierungsbereichen in der Richtung der Y-Achse abgeleitet wird; und

in der X-Achsen-Innenlinien-Berechnungseinrichtung (13) der eingestellte Neigungswinkel ($\theta_{Y1}$-$\theta_{Y5}$) von jeder der X-Achsen-Innenlinien jeweils berechnet wird, indem sukzessive zu dem Neigungswinkel ($\theta_0$) der X-Achsen-Basislinie ein Winkel zuaddiert wird, der aus der Winkeldifferenz zwischen der X-Achsen-Außenlinie (2B) und einer X-Achsen-Basislinie (2) geteilt durch die Anzahl von Markierungsbereichen in der Richtung der Y-Achse abgeleitet wird.

3. Digitaldatenleser nach Anspruch 1 oder 2, dadurch gekennzeichnet, daß die Startpunkte der X-Achsen-Innenlinien durch Segmentieren der Y-Achsen-Basislinie (1) in die Anzahl der X-Achsen-Innenlinien plus eins bestimmt wird, und

die Startpunkte der Y-Achsen-Innenlinien durch Segmentieren der X-Achsen-Basislinie (2) in die Anzahl der Y-Achsen-Innenlinien plus eins bestimmt wird.

4. Digitaldatenleser nach Anspruch 1 oder 2, dadurch gekennzeichnet, daß in der Y-Achsen-Innenlinien-Berechnungseinrichtung (12) ein Startpunkt der Y-Achsen-Innenlinie auf der X-Achsen-Basislinie (2) von jeder erfaßten Position einer jeweiligen Innenlinien-Positionsmarkierung (4) auf dem Blatt abgeleitet wird, und in der X-Achsen-Innenlinien-Bereichnungseinrichtung (13) ein Startpunkt der X-Achsen-Innenlinie auf der Y-Achsen-Basislinie (1) aus jeder erfaßten Position einer jeweiligen Innenlinien-Positionsmarkierung (4) geleitet wird.

5. Digitaldatenleser nach Anspruch 4, dadurch gekennzeichnet, daß die

Y-Achsen-Innenlinien-Berechnungseinrichtung (12) ferner eine oder mehrere Y-Achsen-Innenlinien zwischen den Y-Achsen-Innenlinien bestimmt, deren Startpunkte mit Positionen der Innenlinien-Positionsmarkierungen (4) übereinstimmen; und

die X-Achsen-Innenlinien-Berechnungseinrichtung (13) ferner eine oder mehrere X-Achsen-Innenlinien zwischen den X-Achsen-Innenlinien bestimmt, deren Startpunkte mit Positionen der Innenlinien-Positionsmarkierungen (4) übereinstimmen.

6. Digitaldatenleser nach Anspruch 3 oder 4, dadurch gekennzeichnet, daß die Markierungsbereichs-Berechnungseinrichtung (15) einen vorgegebenen Bereich um den Markierungsbereichs-Basispunkt (D) als den Markierungsbereich berechnet.

7. Digitaldatenleser nach Anspruch 3 oder 4, dadurch gekennzeichnet, daß die Markierungsbreichs-Berechnungseinrichtung (15) jeweilige Bereiche, die von den vier Markierungsbereichs-Basispunkten (D) umgeben sind, als den Markierungsbereich berechnet.

8. Digitaldatenleser eines Digitaldaten-Aufzeichnungsblatts, wobei das Blatt umfaßt: einen Informationsbereich (B), der durch eine X-Achsen-Basislinie (2) definiert ist, die eine X-Achsen-Seite des Informationsbereichs bestimmt, eine Y-Achsen-Basislinie (1), die eine Y-Achsen-Seite des Informationsbereichs bestimmt, ein Feld von Unterteilungsmarkierungen (3) in dem Informationsbereich, eine Vielzahl von Innenlinien-Positionsmarkierungen (4) entlang jeder der Achsen und eine Zusatzmarkierung (5), die einen Eckabschnitt des Informationsbereichs zum Anzeigen eines Lesebereichs und einer Leserichtung bestimmt, wobei der Digitaldatenleser umfaßt:

eine Einrichtung (8) zum Abtasten des Informationsbereichs auf dem Digitaldaten-Aufzeichnungsblatt;

eine Y-Achsen-Innenlinien-Berechnungseinrichtung (12) zum Kompensieren einer Diskrepanz eines Neigungswinkels ($\theta_0$, $\theta_X$) relativ zu der X-Achsen-Basislinie (2) der Y-Achsen-Basislinie (1) und einer Y-Achsen-Außenlinie (1B), die durch Verbinden des Endes der X-Achsen-Basislinie (2) und der Zusatzmarkierung (5) in dem Informationsbereich abgeleitet wird, und zum Berechnen einer Vielzahl von Y-Achsen-Innenlinien ($1A_1$-$1A_5$), deren Startpunkte auf der X-Achsen-Basislinie (2) durch Innenlinien-Positionsmarkierungen (4), die benachbart zu der X-Achsen-Basislinie liegen, bestimmt sind, um den Informationsbereich an vorgegebenen Intervallen in eine Vielzahl von Teilen zwischen der Y-Achsen-Basislinie (1) und der Y-Achsen-Außenlinie (1B) aufzuteilen, wobei die Y-Achsen-Innenlinien-Berechnungseinrichtung (12) ferner für jede Y-Achsen-Innenlinie einen eingestellten Neigungswinkel ($\theta_{x1}$-$\theta_{x5}$) in bezug zu der X-Achsen-Basislinie (2) berechnet;

eine X-Achsen-Innenlinien-Berechnungseinrichtung (13) zum Kompensieren einer Diskrepanz eines Neigungswinkels ($\theta_0$, $\theta_Y$) relativ zu der Y-Achsen-Basislinie (1) der X-Achsen-Basislinie (2) und einer X-Achsen-Außenlinie (2B), die durch Verbinden des Endes der Y-Achsen-Basislinie (1) und der Zusatzmarkierung (5) abgeleitet ist, und zum Berechnen einer Vielzahl von X-Achsen-Innenlinien ($2A_1$-$2A_5$), deren Startpunkte auf der Y-Achsen-Basislinie (1) durch Innenlinien-Positionsmarkierungen (4), die benachbart zu der Y-Achsen-Basislinie liegen, bestimmt werden, um den Informationsbereich an vorgegebenen Intervallen in eine Vielzahl von Teile zwischen der X-Achsen-Basislinie (2) und der X-Achsen-Außenlinie (2B) zu unterteilen, wobei die X-Achsen-Innenlinien-Berechnungseinrichtung (13) ferner für jede X-Achsen-Innenlinie einen eingestellten Neigungswinkel ($\theta_{Y1}$-$\theta_{Y5}$) in bezug auf die Y-Achsen-Basislinie (1) berechnet;

eine Unterteilungsmarkierungs-Erfassungseinrichtung (14a) zum Erfassen einer besagten Unterteilungsmarkierung (3) innerhalb einer Toleranzzone (c) relativ zu einem Schnittpunkt (D) von einer besagten Y-Achsen-Innenlinie ($1A_1$-$1A_5$) und von einer besagten X-Achsen-Innenlinie ($2A_1$-$2A_5$) als die effektive Unterteilungsmarkierung;

eine Markierungsbereichs-Berechnungseinrichtung (15a) zum Berechnen eines Markierungsbereichs (A) im Ansprechen auf die Unterteilungsmarkierung (3), die von der Unterteilungsmarkierungs-Erfassungseinrichtung (14a) erfaßt wird; und

eine Daten-Unterscheidungseinrichtung (16) zum Erfassen des Vorliegens einer Binärsignalmarkierung (K) in dem Markierungsbereich (A), der durch die Markierungsbereichs-Berechnungseinrichtung (15a) bestimmt wird.

**Revendications**

1. Lecteur de données numériques d'une feuille d'enregistrement de données numériques, laquelle feuille comprend une zone d'informations (B) définie par une ligne de base d'axe X (2) qui spécifie un côté axe X de ladite zone d'informations ; une ligne de base d'axe Y (1) qui spécifie un côté axe Y de ladite zone d'informations et un repère ou marque supplémentaire (5) qui spécifie une partie de coin de ladite zone d'informations pour indiquer une zone de lecture et une direction de lecture, ledit lecteur de données numériques comprenant :

un moyen (8) pour balayer la zone d'informations sur ladite feuille d'enregistrement de données numériques ; un moyen de calcul de ligne interne d'axe Y (12) servant à calculer une multitude de lignes internes d'axe Y ($1A_1$ à $1A_5$) qui divisent ladite zone d'informations balayée à des intervalles déterminés en une multitude de parties entre la ligne de base d'axe Y (1) et une ligne externe d'axe Y (1B) obtenues en raccordant l'extrémité extérieure de la ligne de base d'axe X (2) et le repère ou marque supplémentaire (5), ledit moyen de calcul de ligne interne d'axe Y (12) calculant de plus pour chaque ligne interne d'axe Y un angle ajusté d'inclinaison ($\theta_{x1}$ à $\theta_{x5}$) par rapport à la ligne de base d'axe X (2) avec pour effet de compenser la divergence de l'angle d'inclinaison ($\theta_0$, $\theta_x$) de la ligne externe d'axe Y (1B) et de la ligne de base d'axe Y (1) par rapport à la ligne de base d'axe X (2) dans la zone d'informations balayée ; un moyen de calcul de ligne interne d'axe X (13) servant à calculer une multitude de lignes internes d'axe X ($2A_1$ à $2A_5$) qui divisent ladite zone d'informations balayée à des intervalles déterminés en une multitude de parties entre la ligne de base d'axe X (2) et une ligne externe d'axe X (2B) obtenues en raccordant l'extrémité extérieure de la ligne de base d'axe Y (1) et le repère ou marque supplémentaire (5), ledit moyen de calcul de ligne interne d'axe X (13) calculant de plus pour chaque ligne interne d'axe X un angle ajusté d'inclinaison ($\theta_{Y1}$ à $\theta_{Y5}$) par rapport à la ligne de base d'axe Y (1) avec pour effet de compenser la divergence de l'angle d'inclinaison ($\theta_0$, $\theta_Y$) de la ligne externe d'axe X (2B) et de la ligne de base d'axe X (2) par rapport à la ligne de base d'axe Y (1) dans la zone d'informations balayée ; un moyen de détection de point de base de zone de marquage (14) servant à obtenir des points de base de zone de marquage (D) en calculant les points d'intersection des lignes internes d'axe Y ($1A_1$ à $1A_5$) et des lignes internes d'axe X ($2A_1$ à $2A_5$) ; un moyen de calcul de zone de marquage (15) servant à calculer des zones de marquage en réponse aux points de base de zone de marquage (D) calculés par le moyen de détection de point de base de zone de marquage (14), et un moyen de discrimination de données (16) servant à détecter la présence d'une marque de signal binaire (K) dans la zone de marquage décidé par le moyen de calcul de zone de marquage (15).

2. Lecteur de données numériques selon la revendication 1, dans lequel dans ledit moyen de calcul de ligne interne d'axe Y (12), l'angle ajusté d'inclinaison ($\theta_{X1}$ à $\theta_{X5}$) de chacune des lignes internes d'axe Y est respectivement calculé en ajoutant successivement à l'angle d'inclinaison ($\theta_0$) de la ligne de base d'axe Y (1) un angle obtenu à partir de la différence angulaire entre la ligne externe d'axe Y (1B) et la ligne de base d'axe Y (1) divisée par le nombre de zones de marquage dans la direction de l'axe Y, et

dans ledit moyen de calcul de ligne interne d'axe X (13), l'angle ajusté d'inclinaison ($\theta_{Y1}$ à $\theta_{Y5}$) de chacune des lignes internes d'axe X est respectivement calculé en ajoutant successivement à l'angle d'inclinaison ($\theta_0$) de la ligne de base d'axe X un angle obtenu à partir de la différence angulaire entre la ligne externe d'axe X (2B) et la ligne de base d'axe X (2) divisée par le nombre de zones de marquage dans la direction de l'axe Y.

3. Lecteur de données numériques selon la revendication 1 ou 2, dans lequel les points de départ desdites lignes internes d'axe X sont décidés en segmentant la ligne de base d'axe Y (1) en le nombre de lignes internes d'axe X plus une, et

les points de départ desdites lignes internes d'axe Y sont décidés en segmentant la ligne de base d'axe X (2) en le nombre de lignes internes d'axe Y plus une.

4. Lecteur de données numériques selon la revendication 1 ou 2, dans lequel dans le moyen de calcul de ligne interne d'axe Y (12), un point de départ de ladite ligne interne d'axe Y sur la ligne de base d'axe X (2) est obtenu à partir de chaque position détectée d'un repère ou marque de position de ligne interne respectif (4) sur ladite feuille et dans le moyen de calcul de ligne interne d'axe X (13), un point de départ d'une dite ligne interne d'axe X sur la ligne de base d'axe Y (1) est obtenu à partir de chaque position détectée d'un repère ou marque de position de ligne interne respectif (4).

5. Lecteur de données numériques selon la revendication 4, dans lequel ledit moyen de calcul de ligne interne d'axe Y (12) détermine de plus une ou plusieurs lignes internes d'axe Y entre les lignes internes d'axe Y dont les points de départ coïncident avec les positions des repères ou marques de position de ligne interne (4), et

ledit moyen de calcul de ligne interne d'axe X (13) détermine de plus une ou plusieurs lignes internes d'axe X entre les lignes internes d'axe X dont les points de départ coïncident avec les positions des repères ou marques de position de ligne interne (4).

6. Lecteur de données numériques selon la revendication 3 ou 4, dans lequel ledit moyen de calcul de zone de marquage (15) calcule une zone prédéterminée autour du point de base de zone de marquage (D) comme la zone de marquage.

7. Lecteur de données numériques selon la revendication 3 ou 4, dans lequel ledit moyen de calcul de zone de marquage (15) calcule des zones respectives entourées par lesdits quatre points de base de zone de marquage (D) comme la zone de marquage.

8. Lecteur de données numériques d'une feuille d'enregistrement de données numériques, laquelle feuille comprend une zone d'informations (B) définie par une ligne de base d'axe X (2) qui spécifie un côté axe X de ladite zone d'informations, une ligne de base d'axe Y (1) qui spécifie un côté axe Y de ladite zone d'informations, une grille de repères ou marques de division (3) dans ladite zone d'informations, une multitude de repères ou marques de position de ligne interne (4) suivant chacun desdits axes et un repère ou marque supplémentaire (5) qui spécifie une partie de coin de ladite zone d'informations pour indiquer une zone de lecture et une direction de lecture, ledit lecteur de données numériques comprenant :

un moyen (8) pour balayer la zone d'informations sur ladite feuille d'enregistrement de données numériques ; un moyen de calcul de ligne interne d'axe Y (12) pour compenser une divergence de l'angle d'inclinaison ($\theta_0$, $\theta_X$) par rapport à la ligne de base d'axe X (2) de la ligne de base d'axe Y (1) et à une ligne externe d'axe Y (1B) obtenue en raccordant l'extrémité de la ligne de base d'axe X (2) et le repère ou marque supplémentaire (5) dans la zone d'informations balayée, et en calculant une multitude de lignes internes d'axe Y ($1A_1$ à $1A_5$) dont les points de départ sur la ligne de base d'axe X (2) sont décidés par des repères ou marques de position de ligne interne (4) attenant à la ligne de base d'axe X afin de diviser ladite zone d'informations à des intervalles déterminés en une multitude de parties entre la ligne de base d'axe Y (1) et la ligne externe d'axe Y (1B), ledit moyen de calcul de ligne interne d'axe Y (12) calculant de plus pour chaque ligne interne d'axe Y un angle ajusté d'inclinaison ($\theta_{x1}$ à $\theta_{x5}$) par rapport à la ligne de base d'axe X (2) ; un moyen de calcul de ligne interne d'axe X (13) servant à compenser la divergence de l'angle d'inclinaison ($\theta_0$, $\theta_Y$) par rapport à la ligne de base d'axe Y (1) de la ligne de base d'axe X (2) et à une ligne externe d'axe X (2B) obtenue en raccordant l'extrémité de la ligne de base d'axe Y (1) et le repère ou marque supplémentaire (5) et en calculant une multitude de lignes internes d'axe X ($2A_1$ à $2A_5$) dont les points de départ sur la ligne de base d'axe Y (1) sont décidés par des repères ou marques de position de ligne interne (4) attenant à la ligne de base d'axe Y afin de diviser ladite zone d'informations à des intervalles déterminés en une multitude de parties entre la ligne de base d'axe X (2) et la ligne externe d'axe X (2B), ledit moyen de calcul de ligne interne d'axe X (13) calculant de plus pour chaque ligne interne d'axe X un angle ajusté d'inclinaison ($\theta_{Y1}$ à $\theta_{Y5}$) par rapport à la ligne de base d'axe Y (1) ;

un moyen de détection de repère ou marque de division (14a) servant à détecter un dit repère ou marque de division (3) à l'intérieur d'une zone de tolérance (c) par rapport à un point d'intersection (D) d'une dite ligne interne d'axe Y ($1A_1$ à $1A_5$) et d'une dite ligne interne d'axe X ($2A_1$ à $2A_5$) comme le repère ou marque de division effectif ;

un moyen de calcul de zone de marquage (15a) servant à calculer une zone de marquage (A) en réponse au repère ou marque de division (3) détecté par le moyen de détection de repère ou marque de division (14a), et un moyen de discrimination de données (16) servant à détecter la présence d'une marque de signal binaire (K) dans la zone de marquage (A) décidé par le moyen de calcul de zone de marquage (15a).

FIG. 2

FIG. 1

FIG. 3

FIG. 4

EP 0 437 627 B1

FIG. 5

FIG. 6

FIG. 7

EP 0 437 627 B1

FIG. 9

FIG. 8

FIG.10

$M_{BY}=5$

$M_{BX}=5$

$Z=M_{BX}\cdot M_{BY}=5\times5=25$

FIG.11

$M_{BX}=4$

$M_{BY}=4$

$Z=M_{BX}\cdot M_{BY}=4\times4=16$

EP 0 437 627 B1

F I G . 12

$$Z = M_{BX} \cdot M_{BY} - 1 = 15 \times 15 - 1 = 224$$

EP 0 437 627 B1

F I G . 13

$M_{BX} = 4$  B1  B2  A  5

$M_{BY} = 4$

$Z = M_{BX} \cdot M_{BY} = 4 \times 4 = 16$

F I G . 14

$M_{BX'} = 5$  B1  B2  A  5

$M_{BY'} = 5$

$Z = M_{BX'} \cdot M_{BY'} = 5 \times 5 = 25$

EP 0 437 627 B1

F I G . 15

B          5

1

K

3     4   2

F I G . 16

b   B   A

| P_4 | P_8 | P_12 | P_16 |
| P_3 | P_7 | P_11 | P_15 |
| P_2 | P_6 | P_10 | P_14 |
| P_1 | P_5 | P_9 | P_13 |

EP 0 437 627 B1

F I G . 18

F I G . 17

F I G .19

(a)

| | | | |
|---|---|---|---|
| $P_1$ | $P_5$ | $P_9$ | $P_{13}$ |
| $P_2$ | $P_6$ | $P_{10}$ | $P_{14}$ |
| $P_3$ | $P_7$ | $P_{11}$ | $P_{15}$ |
| $P_4$ | $P_8$ | $P_{12}$ | $P_{16}$ |

$Q_1$  $Q_2$  $Q_3$  $Q_4$

4  2  6  7

(b)  b

JIS
Kanji code       4267

F I G .20

$B_1$  $B_2$
5
1
2

F I G .21

$B_1$  $B_2$
5
1
2
A

5
1
$B_2$
$B_1$
2
A

EP 0 437 627 B1